# EUROPEAN PATENT APPLICATION

(11) **EP 4 618 697 A1**
(43) Date of publication of application: **17.09.2025**
(21) Application number: 24162569.8
(22) Date of filing: 11.03.2024
(51) Int. Cl.: H05B 47/19, H04L 61/5007

(54) **METHOD FOR CONNECTING LIGHTING SYSTEM COMPONENTS**

(71) Applicant: Tridonic GmbH & Co. KG, 6851 Dornbirn (AT); Zumtobel Lighting GmbH, 6850 Dornbirn (AT)
(72) Inventor: Becker, Markus, 6851 Dornbirn (AT); Heim, Andreas, 6851 Dornbirn (AT)
(74) Representative: Beder, Jens

(57) **Abstract**

The present invention relates to a method for connecting networkable devices (9..14) of a lighting system comprising receiving (101..107), by a first networkable device (9..14), a first network ID; generating (109), by the first networkable device (9..14), connection information from the first network ID using an algorithm; and establishing (109), by the first networkable device (9..14), a connection to a second networkable device (9..14) based on the connection information.

## Description

The present invention relates to the technical field of networking devices of a lighting system, and more particularly, to a method for generating connection information required by a networking device to establish a wireless connection between the networking device and other lighting system components.

In some lighting systems, switches and sensors send signals to luminaires or other system components via a wireless communication network. To generate a network or to integrate a component (e.g., luminaire, sensor or switch) into the network, the device needs respective network information (e.g., network name, password, key).

Many manufacturers offer lighting devices for "smart home" networking, which is based on Matter, for example. Matter is an open-source connectivity standard for smart home and Internet of Things (IoT) devices and can based on Thread which is an IPv6-based networking protocol designed for low-power IoT devices in an IEEE 802.15.4-wireless mesh network and is independent of other 802.15 mesh networking protocols, such a ZigBee, Z-Wave, and Bluetooth LE.

The network installation is usually carried out via a Thread border router and manufacturer-specific Matter control system (matter controller) such as Amazon Alexa, Apple Home, Google Home or SmartThings.

However, Matter is often only suitable for home use because the use of border routers and matter controllers is undesirable or not possible in professional applications such as public parking garages or schools.

It is an object of the present invention to provide a method and system, which reduce the above problems. In particular, an object of the present invention is to provide a method, an apparatus and a system, with which a network can be generated without Thread border router and matter controller with low effort and costs.

This object is achieved by a method, an apparatus and a system according to the enclosed independent claims. Advantageous features of the present invention are defined in the corresponding dependent claims.

According to the present invention, a method for connecting networkable devices of a lighting system comprises the steps of:
- receiving, by a first networkable device, a first network ID;
- generating, by the first networkable device, connection information from the first network ID using an algorithm; and
- establishing, by the first networkable device, a connection to a second networkable device based on the connection information.

As the networkable device generates the connection information itself, no connection information needs to be transmitted to the device in order to generate a network or to connect the device to a network and a controller that provides the connection information is not required. Further, the algorithm for generating the connection information is the same in every networkable device of the lighting system, so that every device (node) that receives the same network ID generates the same connection information and thus joins the same network. In particular, the method can further comprise receiving, by the second networkable device, the first network ID, and generating, by the second networkable device, the same connection information from the first network ID using the algorithm. The connection to the second networkable device can be a wired or wireless connection.

The algorithm used by all networkable devices can be a hash algorithm, an algorithm that selects at least one predetermined part of the network ID, an algorithm that uses a table to assign a character string to an input value, or a combination thereof. In this way, the connection information or part of it does not have to be contained in the network ID, neither encrypted nor unencrypted, which increases security.

If different connection information, such as network key and network name, has to be generated, different algorithms can be used by the networkable device. In particular, the step of generating, by the first networkable device, the connection information can comprise generating at least a first connection information from the first network ID using a first algorithm and a second connection information from the first network ID using a second algorithm, wherein in the step of establishing, by the first networkable device, the connection to the second networkable device, the connection is established at least on the basis of the first connection information and the second connection information.

The connection to the second networkable device can be based on the Matter standard and the step of establishing, by the first networkable device, the connection to the second networkable device can comprise
a) closing a matter commissioning window;
b) setting an active Matter Fabric;
c) setting access control list entries;
d) establishing a Thread network;
e) installing Mapper groups;
f) assigning a global IPv6 address to the first networkable device;
g) joining the first networkable device to an IPv6 multicast address.

A part of the parameters used in steps b) to e) can be preset/stored in each device by the manufacturer or user, such as the global IPv6 address assigned in step f). The IPv6 adress can be statically given or derived from a given IPv6 multicast prefix and a dynamic part derived from the ID. The remaining parameters (i.e., connection information) can be generated directly or indirectly on the basis of the network ID. In particular, the connection information can be at least one of ephemeral key, Thread PAN ID, Thread Extended PAN ID, Thread Network Name, Thread Network Key, Thread Network Prefix, Group Name, and Group Keyset. In addition, at least one of Node Operational Certificate, Intermediate Certificate and Root Certificate can be generated based on the ephemeral key.

The network ID can be a random or user-selected character string. Alternatively, the network ID is a unique identification number of a passive or active RFID tag, wherein the step of receiving, by the first networkable device, the first network ID comprises detecting the RFID tag within a communications range of a RFID reader circuit of the first networkable device and reading the unique identification number from the detected RFID tag.

The presence of the RFID tag could only be detected in certain situations within a certain time window, to save energy or to meet certain security requirements. Preferably, in the step of detecting the RFID tag, if a mains supply has become available at the first networkable device, the RFID reader circuit is activated and a countdown timer is started, if the RFID tag is detected, the countdown timer is restarted and if the countdown timer has expired, the RFID reader circuit is deactivated.

Alternatively, the network ID can be set or generated by a mobile provisioning device, which transmits the network ID to the networkable device via a wireless connection. Preferably, the network ID is a random number and the method further comprises generating, by the provisioning device, the random number and transmitting, by the provisioning device, the random number to the first networkable device via Wireless Local Area Network, Wireless Personal Area Network, NFC, Thread, ZigBee, Bluetooth or an infrared transmission.

As the connection information generated only depends on the network ID received, devices can be assigned to different networks (group commissioning) by transmitting different network IDs to the devices. In particular, the first networkable device and the second networkable device can be part of a first network and, to generate a second network or to connect a third networkable device to the second network, the method further comprises the steps of:
- receiving, by the third networkable device, a second network ID;
- generating, by the third networkable device, third connection information from the second network ID using the algorithm; and
- establishing, by the third networkable device, a connection to a fourth networkable device based on the third connection information.

According to the present invention, a networkable device for a lighting system is configured to receive a first network ID, to generate connection information from the first network ID using an algorithm and to establish a connection to another networkable device based on the connection information.

According to the present invention, a lighting system comprises a plurality of networkable devices and a provisioning device for providing a first network ID, wherein each networkable device is configured to receive the first network ID from the provisioning device, to generate first connection information from the first network ID using an algorithm and to establish a connection to another networkable device of the plurality of networkable devices based on the first connection information.

In addition, the provisioning device can be a first provisioning device, wherein the lighting system further comprises a second provisioning device for providing a second network ID, the first network ID and the second network ID are a unique identification number of a passive or active RFID tag of the first provisioning device and a unique identification number of a passive or active RFID tag of the second provisioning device, respectively, and each networkable device is configured to receive the second network ID from the second provisioning device and to generate second connection information from the second network ID using the algorithm.

Alternatively, the provisioning device can be configured to selectively transmit, based on a user operation, the first network ID or a second network ID to a first networkable device of the plurality of networkable devices, wherein each networkable device is configured to receive the second network ID from the provisioning device and to generate second connection information from the second network ID using the algorithm.

Embodiments of the invention are discussed in detail with reference to the enclosed figures, in which
FIG. 1 shows a lighting system according to an embodiment of the present invention,
FIG. 2 shows a simplified block diagram of a networkable device of the lighting system shown in FIG. 1,
FIG. 3 shows a flowchart of a method for connecting the networkable device to the lighting system according to an embodiment of the present invention, and
FIG. 4 shows a flowchart of a method for generating the connecting information required by the networking device to establish a wireless connection between the networking device and other matter devices according to an embodiment of the present invention.

In the figures, same reference numbers denote same or equivalent structures. The explanation of structures with same reference numbers in different figures is avoided where deemed possible for sake of conciseness.

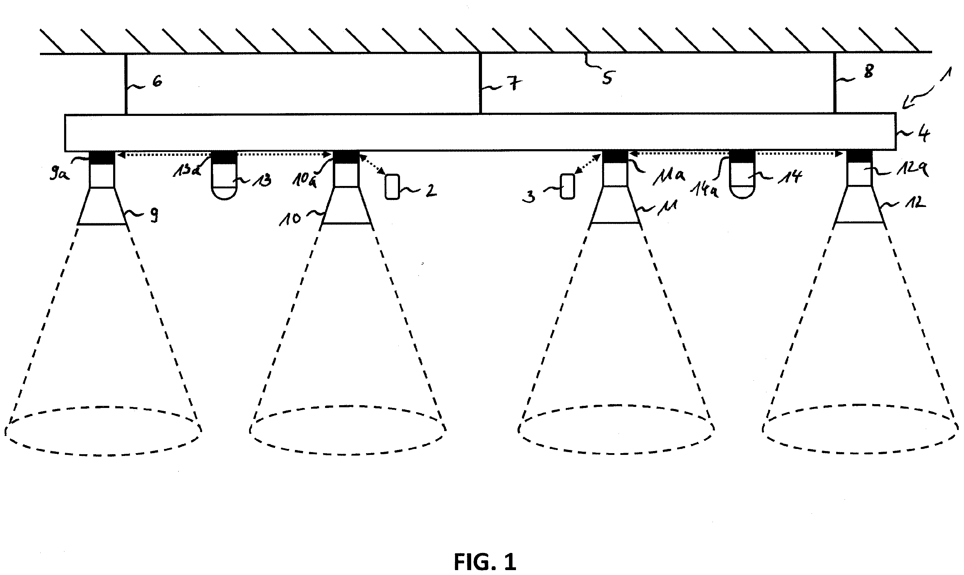

FIG. 1 shows a lighting system according to a first embodiment of the present invention. The system shown in FIG. 1 comprises a light band 1 (strip light) and two RFID tags 2, 3. The light band 1 consists of a mounting rail 4 fixed to a ceiling 5 with cord suspension 6..8, four luminaries 9..12 mounted on the mounting rail 4 and two presence sensors 13, 14 mounted on the mounting rail 4. Each of the luminaries 9..12 and the presence sensors 13, 14 is a Matter device configured to communicate in line with the Matter standard or also with the Thread radio protocol via a transceiver 9a.. 14a. Communication between devices 9..14 in Matter is generally based on the Internet Protocol (IP). Consequently, the intended transmission protocols are also IP-based. Devices 9..14 that are to comply with the Matter standard use at least one of the following three options: Ethernet-/LAN-Kabel (IEEE 802.3), WiFi / WLAN (IEEE 802.11), Thread (IEEEE 802.15.4).

Without loss of generality, the lighting system shown in FIG. 1 comprises two matter groups, wherein presence sensor 13 and luminaries 9 and 10 are assigned to a first matter group and presence sensor 14 and luminaries 11 and 12 are assigned to a second matter group. In this way, presence sensor 13 only sends a switch-on command to the luminaries 9 and 10 if a presence of a person is detected by the presence sensor 13 and presence sensor 14 only sends a switch-on command to the luminaries 11 and 12 if a presence of a person is detected by the presence sensor 14.

Commissioning the presence sensor 13 and the luminaries 9 and 10 to the first matter group and commissioning the presence sensor 14 and the luminaries 11 and 12 to the second matter group is performed using the RFID tag 2 and the RFID tag 3, wherein unique identification number (UID) of the RFID tag 2 is read by the presence sensor 13 and the luminaries 9 and 10 and the UID of the RFID tag 3 is read by the presence sensor 14 and the luminaries 11 and 12, or vice versa. The RFID tags 2 and 3 can be passive RFID tags.

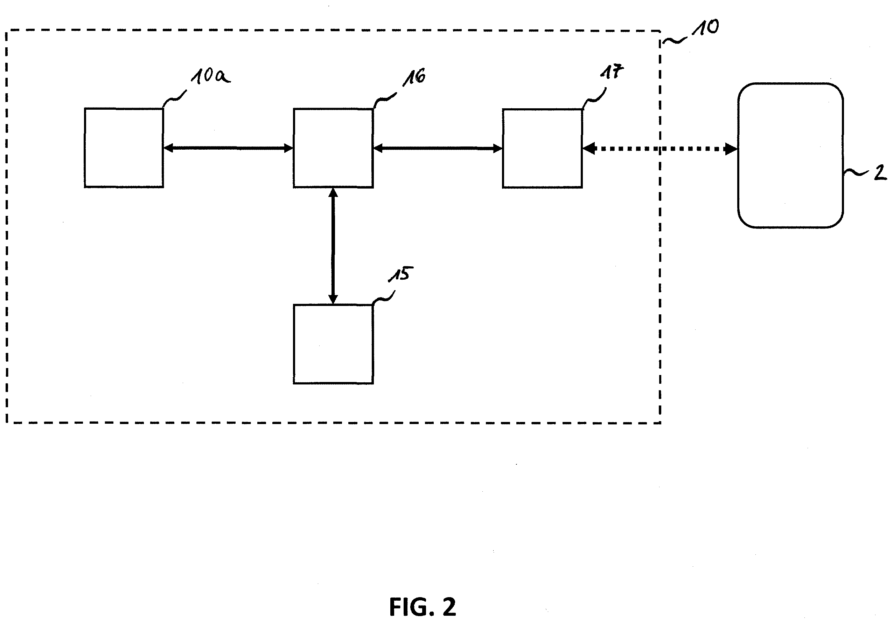

FIG. 2 shows components of the luminaire 10, which are also contained in the other luminaires 9, 11, 12 and the presence sensors 13, 14. The luminaire 10 comprises the transceiver 10a for receiving the switch-on command from the presence sensor 13, a non-volatile memory 15, and a processor 16 for generating connection information to establish a wireless connection to other networkable devices (luminaire 9 and presence sensor 13) of the (first) matter group and an RFID reader circuit 17.

The RFID reader circuit 17 may comprise one of an RFID reader and an RFID reader-writer. An RFID reader as used herein may refer to an RFID device having read-only access to RFID tag 3. An RFID reader-writer as used herein may refer to an RFID device having read and write access to RFID tag 3.

The RFID reader circuit 17 is configured to read UID from any RFID tag 2, 3 recognized within its communications range. Communications range of the RFID tags 2, 3 and/or distance between the Matter devices 9..14 can be selected so that communication areas of the RFID reader circuits do not overlap, so that the user can insert one of the RFID tags 2 and 3 into the communications range of each device that is to belong to a common group (first matter group) and can insert the other RFID tag 2, 3 into the communications range of each device that is to belong to another common group (second matter group). The RFID tags 2, 3 may preferably be designed as a business card and imprinted with one or more of: support contact information, a quick reference guide in the form of text and/or a QR code, and blank fields/boxes for further configuration parameters, if any.

In the lighting system shown in FIG. 1, not only is the group commissioning performed based on the UID, but also the connection information required by a Matter device 9..14 to establish a (wireless) connection between the Matter device 9..14 and another Matter device 9..14 of its group is generated based on the UID.

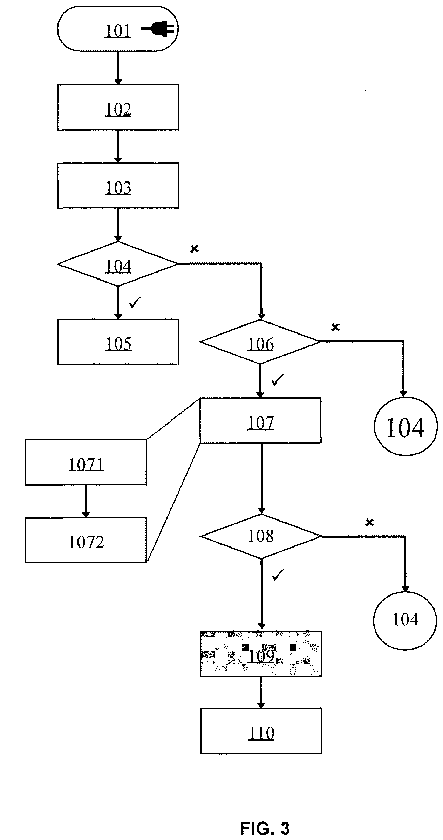

FIG. 3 illustrates an implementation of a method that can be performed by each of the luminaires 9..12 and presence sensors 13..14 shown in FIG. 1, in particular by its processor 16, to generate/create a new matter group/network or to connect it to incorporate it into an existing group/network. The method shown in FIG. 3 comprises, if a mains supply has become available at the respective device in step 101, a step of activating 102 the RFID reader circuit 17 of the respective device, and a step of starting 103 a commissioning countdown timer. The method 1 further comprises, if the commissioning countdown timer has expired 104, a step of deactivating 105 the RFID reader circuit 17.

The steps 101 to 105 may protect against unauthorized (re-)commissioning. Since fuse panels are typically subject to authorized access, a mains supply becoming 101 available may be taken as an authorized (re-)commissioning trigger. The (re-)commissioning may be confined to a predetermined time window of several minutes up to several days between the starting 103 and the expiry 104 of the commissioning countdown timer.

The method 1 comprises, if an RFID tag 2, 3 has been recognized 106 within the communications range of the RFID reader circuit 17, a step of reading 107 the UID from the RFID tag 2, 3. If no RFID tag 2, 3 has been recognized 106 within the communications range, the method 1 may return to step 104.

The reading 107 of the UID may comprise a step of reading 1071 a UID from a memory on the RFID tag 2, 3 in a custom (i.e., non-standards-compliant) format, if available, and a step of reading 1072 the UID from the memory on the RFID tag 3 in a standards-compliant format otherwise. The reading 1072 of the UID in standards-compliant format enables using the UID of any blank RFID tag 3 for group (re-)commissioning. Note that if a blank RFID tag 3 used for commissioning of a group of devices 9..14 is lost, any group re-commissioning based on a different blank RFID tag 3 must be exercised for the whole group since the different RFID tag 2, 3 involves a different UID. As such, the reading 1071 of the UID in custom format enables to retrieve a UID of a blank RFID tag 2, 3 saved on a spare RFID tag 2, 3 for group re-commissioning.

The method further comprises a step of validating 108 the UID read from the RFID tag 2, 3. If no identification number has been validated 108, the method 1 may return to step 104. In step 109, at least some connection information required by the device to establish a wireless connection between the device and another device is generated based on the UID and a connection to the other device(s) established based on the connection information. The method may further comprise a step of confirming 110 the connection and/or reading of the UID by visibly modulating a brightness of the respective luminaire 9..12 or an indicator LED of the presence sensor 13, 14.

The amount and type of connection information to be generated/provided depends on the type of connection/network. Table 1 shows in the left column the connection information required by a Matter device 9..14 to establish a (wireless) connection between the Matter device 9..14 and another Matter device 9..14. In the other columns, an "x" indicates whether the respective connection information can be a static/stored value or based on a static value, and/or can be generated from the received Single Parameter, i.e. the UID. The static value is stored in the Matter devices 9..14 by the manufacturer or user. Preferably, other devices, such as controllers or routers, do not provide the connection information shown in Table 1.

**Table 1**

| Connection Information | Static Value(s) | Generated from the UID or another received Parameter |
|---|---|---|
| Public/Private Key pair "ephemeral Key" | x | x |
| Node Operational Certificate | x (via ephemeral Key) | |
| Intermediate Certificate | x (via ephemeral Key) | |
| Root Certificate | x (via ephemeral Key) | |
| ACL entries | x | |
| Thread Channel | x (25) | |
| Thread PAN ID | | x |
| Thread Extended PAN ID | | x |
| Thread Network Name | x | x |
| Thread Network Key | | x |
| Thread Network Prefix | x | x |
| Group Name | x | x |
| Group Keyset | x (via IPK) | x |
| Group Key map | x | |
| Global IPv6 address | x Used for prefix, IID based on assigned Thread address | |
| IPv6 multicast adress | IPv6 mutlicast previx | x |

Public/Private Key is an ephemeral Key and is generated for each execution of a key establishment process. The ephemeral key can be used more than once, within a single session (e.g., in broadcast applications) where the sender generates only one ephemeral key pair per message and the private key is combined separately with each recipient's public key.

Three unique identifiers identify thread networks: the PAN ID (Personal Area First network ID) which is a 2-Byte-Network-ID, the Extended PAN ID which is a 8-Byte-Network-ID and the Network Name. IPK is a digital certificate on an issuer's RSA public key (IPK).

As shown in Table 1 the ephemeral key (Public/Private Key pair), Thread PAN ID, Thread Extended PAN ID, Thread Network Name, Thread Network Key, Thread Network Prefix, Group Name, and Group Keyset can be generated from the received UID and Node Operational Certificate, Intermediate Certificate and Root Certificate can be generated from the ephemeral key.

In addition to the static values, at least one algorithm/rule used to generate the connection information based on the received UID is stored in the memory 15 of each Matter device 9..14. The algorithm can be a hash algorithm, an algorithm that selects at least one predetermined part of the network ID (character string), an algorithm that uses a table to assign a character string to an input value, or a combination thereof. In this way, each Matter device 9..14 that receives the same network ID generates the same connection information and thus joins the same network. Grouping devices using different UIDs is optional. To increase security, an algorithm for generating a key can be set/predetermined in such a way that the network ID does not contain the key or part of it.

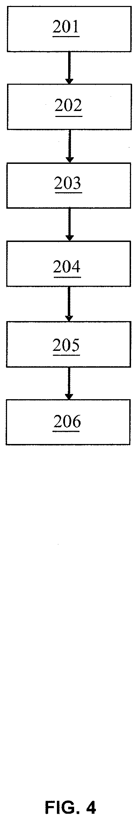

FIG. 4 illustrates an implementation of a method performed in step 109 shown in FIG. 4 and carried out by each Matter device 9..14 to generate the connecting information. The method comprises a step of closing 201 Matter Commissioning Window. In step 202, an active Matter Fabric is activated/set. The Matter Fabric is a set of security data including a root certificate with the public/private key pair, the node operational certificate (NOC), the intermediate certificate (ICAC), and the root certificate (RCAC). The method further comprises a step of setting 203 an access control list (ACL) entries defining for each Matter device 9..14 which operation it may perform, e.g. a motion detector may switch a light. In step 204, the Thread network is established based on the Thread Channel, Thread PAN ID, Thread Extended PAN ID, Thread Network Name, Thread Network Key and the Thread Network Prefix. In step 205, the mapper group(s) are installed based on the Group Name, Group Keyset and the Group Key, and the Global IPv6 address is assigned to the Matter device 9..14.

In the lighting system shown in FIG. 1, a UID of any one of the RFID tag 2 and the RFID tag 3 is transmitted to the presence sensor 13 and the luminaries 9 and 10, and the UID of the other RFID tag 2, 3 is transmitted to the presence sensor 14 and the luminaries 11 and 12 to commission the first and second matter group. But grouping devices using different UIDs is optional and the luminaires 9..12 and the presence sensors 13..14 can be connected to each other in a network via a single UID.

The UID is used as a network ID and the RFID tags 2 and 3 are used as mobile provisioning devices. Alternatively, any parameter (character string), such as a random number, can be transmitted as network ID to the luminaires 9..12 and the presence sensors 13..14 and can be used to generate the connection information. Especially a mobile provisioning device, such as a smartphone or tablet, can be used to transmit a network ID (random number or other character string) to a matter device 9..14, whereby for grouping, different network IDs are provided and same network ID is transmitted only to the devices that are to belong to the same group.

The mobile provisioning device can be configured to generate a graphical user interface to allow a user to enter, generate or select a network ID and to start the transmission of the network ID to a desired matter device 9..14. The network ID can be transmitted from the mobile provisioning device to the respective matter device 9..14 via NFC, Bluetooth, ZigBee, Thread or an infrared signal.

## Claims

1. A method for connecting networkable devices (9..14) of a lighting system, the method comprising the steps of:
receiving (101..107), by a first networkable device (9..14), a first network ID;
generating (109), by the first networkable device (9..14), connection information from the first network ID using an algorithm; and
establishing (109), by the first networkable device (9..14), a connection to a second networkable device (9..14) based on the connection information.

2. The method according to claim 1, further comprising the steps of:
receiving, by the second networkable device (9..14), the first network ID; and
generating, by the second networkable device (9..14), the connection information from the first network ID using the algorithm.

3. The method according to claim 1 or 2, wherein
the algorithm is a hash algorithm, an algorithm that selects at least one predetermined part of the first network ID and/or an algorithm that uses a table to assign a character string to an input value.

4. The method according to any one of the preceding claims, wherein
the step of generating (109), by the first networkable device (9..14), the connection information comprises generating at least a first connection information from the first network ID using a first algorithm and a second connection information from the first network ID using a second algorithm; and
in the step of establishing (109), by the first networkable device (9..14), the connection to the second networkable device (9..14), the connection is established at least on the basis of the first connection information and the second connection information.

5. The method according to claim 4, wherein
the first connection information is a network key and the second connection information is a network name.

6. The method according to any one of the preceding claims, wherein the connection to the second networkable device (9..14) is based on the Matter standard; and
the step of establishing (109), by the first networkable device (9..14), the connection to the second networkable device (9..14) comprises
closing (201) a matter commissioning window;
setting (202) an active Matter Fabric;
setting (203) access control list entries;
establishing (204) a Thread network;
installing (205) Mapper groups; and
assigning (206) a global IPv6 address to the first networkable device (9..14).

7. The method according to any one of the preceding claims, wherein
the connection to the second networkable device (9..14) is based on the Matter standard; and the connection information is at least one of ephemeral key, Thread PAN ID, Thread Extended PAN ID, Thread Network Name, Thread Network Key, Thread Network Prefix, Group Name, and Group Keyset.

8. The method according to claim 7, further comprising the step of:
generating, based on the ephemeral key, at least one of Node Operational Certificate, Intermediate Certificate and Root Certificate.

9. The method according to any one of the preceding claims, wherein
the first network ID is a unique identification number of a passive or active RFID tag (2, 3); and
the step of receiving (101..107), by the first networkable device (9..14), the first network ID comprises detecting (101..106) the RFID tag (2, 3) within a communications range of a RFID reader circuit (17) of the first networkable device (9..14) and reading (107) the unique identification number from the detected RFID tag (2, 3).

10. The method according to claim 9, wherein
in the step of detecting (101..106) the RFID, if a mains supply has become available at the first networkable device (9..14), the RFID reader circuit (17) is activated (102) and a countdown timer is started (103), if the RFID tag (2, 3) is detected, the countdown timer is restarted and if the countdown timer has expired, the RFID reader circuit (17) is deactivated.

11. The method according to any one of claims 1 to 8, wherein
the first network ID is a random number and the method further comprises the steps of:
generating, by a provisioning device, the random number; and
transmitting, by the provisioning device, the random number to the first networkable device (9..14) via Wireless Local Area Network, Wireless Personal Area Network, NFC, Thread, ZigBee, Bluetooth or an infrared transmission.

12. The method according to any one of the preceding claims, wherein
the first networkable device (9..14) and the second networkable device (9..14) are part of a first network and, to generate a second network or to connect a third networkable device (9..14) to the second network, the method further comprises the steps of:
receiving, by the third networkable device, a second network ID;
generating, by the third networkable device (9..14), third connection information from the second network ID using the algorithm; and
establishing, by the third networkable device (9..14), a connection to a fourth networkable device (9..14) based on the third connection information.

13. A networkable device for a lighting system, wherein the networkable device (9..14) is configured to receive a first network ID, to generate connection information from the first network ID using an algorithm and to establish a connection to another networkable device (9..14) based on the connection information.

14. A lighting system comprising
a plurality of networkable devices (9..14); and
a provisioning device for providing a first network ID; wherein
each networkable device (9..14) is configured to receive the first network ID from the provisioning device, to generate first connection information from the first network ID using an algorithm and to establish a connection to another networkable device (9..14) of the plurality of networkable devices (9..14) based on the first connection information.

15. The lighting system according to claim 13, wherein
the provisioning device is a first provisioning device and the lighting system further comprises a second provisioning device for providing a second network ID; and
the first network ID and the second network ID are a unique identification number of a passive or active RFID tag of the first provisioning device and a unique identification number of a passive or active RFID tag of the second provisioning device, respectively; and
each networkable device (9..14) is configured to receive the second network ID from the second provisioning device and to generate second connection information from the second network ID using the algorithm; or
the provisioning device is configured to selectively transmit, based on a user operation, the first network ID or a second network ID to a first networkable device of the plurality of networkable devices (9..14); and
each networkable device (9..14) is configured to receive the second network ID from the provisioning device and to generate second connection information from the second network ID using the algorithm.
